# EUROPÄISCHE PATENTANMELDUNG

(11) **EP 1 892 522 A2**
(43) Veröffentlichungstag der Anmeldung: **27.02.2008**
(21) Anmeldenummer: 07016147.6
(22) Anmeldetag: 17.08.2007
(51) Int. Cl.: G01N 21/47, G02B 21/32

(54) **Drehvorrichtung für einen optischen Tomographen und optischer Tomograph mit einer Drehvorrichtung**

(30) Priorität: 25.08.2006 DE 102006039935
(71) Anmelder: Carl Zeiss MicroImaging GmbH, 07745 Jena (DE)
(72) Erfinder: Bartzke, Karlheinz, 07749 Jena (DE); Wegwerth, Michael, 07749 Jena (DE); Wolleschensky, Ralf, 07743 Jena (DE); Günther, Georg, 99441 Großschwabhausen (DE)
(74) Vertreter: Hampe, Holger

(57) **Zusammenfassung**

Es wird bereitgestellt eine Drehvorrichtung (1) für einen optischen Tomographen mit der ein Probenträger (4) mit einem zu untersuchenden Objekt (5) um eine vorbestimmte Objektachse (6) drehbar ist,
wobei die Drehvorrichtung (1) aufweist
ein Drehmodul (8; 15), das eine Drehung um eine erste Drehachse (10) bewirken kann,
ein erstes Positioniermodul (7), das mit dem Drehmodul (8) verbunden ist und mit dem das erste Drehmodul (8; 15) entlang der ersten Drehachse (10) positionierbar ist,
und ein zweites Positioniermodul (9; 11, 12; 16; 17), das mit dem Drehmodul (8; 15) verbunden ist und an dem der Probenträger (4) mit dem zu untersuchenden Objekt (5) befestigbar ist,
wobei mittels des zweiten Positioniermoduls (9; 11, 12; 16; 17) die Objektachse (6) so relativ zur ersten Drehachse (10) positionierbar ist, daß bei Drehung durch das Drehmodul (8; 15) das Objekt (5) um die Objektachse (6) gedreht wird.

## Beschreibung

Die vorliegende Erfindung betrifft eine Drehvorrichtung für einen optischen Tomographen und einen optischen Tomographen mit einer Drehvorrichtung.

Bei der optischen Tomographie, bei der beispielsweise die Fluoreszenzstrahlung eines in einem Gelstab fixierten Objekts in verschiedenen Richtungen erfaßt werden soll, wird eine Drehvorrichtung benötigt, die es gestattet, das mikroskopisch zu beobachtende Objekt (z.B. einen Embryo im Gelstab) zu finden und um eine durch das Objekt hindurchgehende Objektachse mit einer Genauigkeit von ca. 0,2 µm zu drehen.

Es ist daher Aufgabe der vorliegenden Erfindung, eine Drehvorrichtung für einen optischen Tomographen bereitzustellen, mit der das Objekt um eine vorbestimmte Objektachse mit einer vorbestimmten Genauigkeit gedreht werden kann. Ferner soll ein optischer Tomograph mit einer solchen Drehvorrichtung bereitgestellt werden.

Die Aufgabe wird gelöst durch eine Drehvorrichtung für einen optischen Tomographen, mit der ein Probenträger mit einem zu untersuchenden Objekt um eine vorbestimmte Objektachse drehbar ist, wobei die Drehvorrichtung ein Drehmodul, das eine Drehung um eine erste Drehachse bewirken kann, ein erste Positioniermodul, das mit dem Drehmodul verbunden ist und mit dem das Drehmodul entlang der ersten Drehachse positionierbar ist, und ein zweites Positioniermodul aufweist, das mit dem Drehmodul verbunden ist und an dem der Probenträger mit dem zu untersuchenden Objekt befestigbar ist, wobei mittels des zweiten Positioniermoduls die Objektachse so relativ zur ersten Drehachse positionierbar ist, daß bei Drehung durch das Drehmodul das Objekt um die Objektachse gedreht wird.

Mit dieser Drehvorrichtung kann mittels eines relativ einfachen Aufbaus die erforderliche Genauigkeit bei der Drehung um die vorbestimmte Objektachse erzielt werden.

Insbesondere kann das Drehmodul einen ersten Drehtisch aufweisen, der um die erste Drehachse drehbar ist, und kann mittels des zweiten Positioniermoduls die Objektachse so positioniert werden, daß sie mit der ersten Drehachse zusammenfällt.

Ferner kann das zweite Positioniermodul einen x-y-Tisch aufweisen, der drehfest mit dem Drehmodul verbunden ist.

Es ist auch möglich, daß das zweite Positioniermodul einen zweiten und dritten Drehtisch aufweist, wobei der zweite Drehtisch um eine zweite Drehachse drehbar am ersten Drehtisch, der dritte Drehtisch um eine dritte Drehachse drehbar am zweiten Drehtisch befestigt ist und weder die erste und zweite Drehachse noch die zweite und dritte Drehachse zusammenfallen.

Ferner kann das zweite Positioniermodul einen zweiten Tisch aufweisen, der über eine Linearverschiebeeinrichtung mit dem ersten Drehtisch verbunden ist, wobei der Objektträger relativ zum ersten Drehtisch drehbar ist.

Für diese Drehbarkeit des Objektträgers kann beispielsweise der zweite Tisch drehbar gegenüber dem ersten Drehtisch ausgebildet sein.

Ferner kann das Drehmodul einen x-y-Tisch aufweisen, der so angesteuert wird, daß das zweite Positioniermodul um die erste Drehachse gedreht wird, und bei dem das zweite Positioniermodul einen Drehtisch aufweist, der drehfest mit dem x-y-Tisch des Drehmoduls verbunden ist.

Die Aufgabe wird ferner gelöst durch einen optischen Tomographen mit einer oben beschriebenen Drehvorrichtung, einem Beleuchtungsmodul zur Beleuchtung des Objekts, einem Detektionsmodul zum Detektieren zumindest eines optischen Schnitts des Objekts und einem Steuermodul zur Steuerung des Tomographen. Das Detektionsmodul kann z.B. Fluoreszenzstrahlung vom Objekt detektieren. Natürlich kann auch jede andere vom Objekt aufgrund der Beleuchtung ausgehende Strahlung detektiert werden. Insbesondere kann das Detektionsmodul die Strahlung vom Objekt konfokal detektieren.

Der optische Tomograph kann insbesondere als Mikroskop oder auch als Laser-Scanning-Mikroskop ausgebildet sein.

Die Erfindung wird nachfolgend beispielhalber anhand der beigefügten Zeichnungen noch näher erläutert. Es zeigen:
- Fig. 1: schematisch eine perspektivische Ansicht des optischen Tomographen;
- Fig. 2: eine Seitenansicht der Drehvorrichtung gemäß einer ersten Ausführungsform;
- Fig. 3: eine Ansicht von unten der Drehvorrichtung von Fig. 2;
- Fig. 4: eine Ansicht von unten einer Abwandlung der Drehvorrichtung von Fig. 2;
- Fig. 5: eine Seitenansicht einer weiteren Ausführungsform der Drehvorrichtung, und
- Fig. 6: eine Ansicht von unten einer Abwandlung der Drehvorrichtung von Fig. 2.

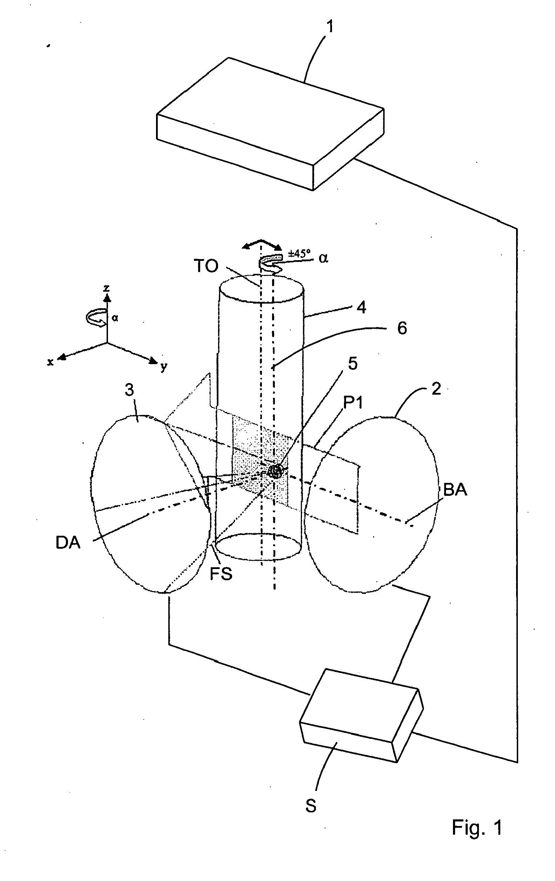

In Fig. 1 ist schematisch ein optischer Tomograph dargestellt, der eine Drehvorrichtung 1, ein Beleuchtungsmodul 2, ein Detektionsmodul 3 sowie ein Steuermodul S umfaßt. Für das Beleuchtungsmodul 2 und das Detektionsmodul 3 ist jeweils nur schematisch eine Linse dargestellt. Natürlich umfassen das Beleuchtungsmodul 2 und das Detektionsmodul 3 weitere, dem Fachmann bekannte Elemente, um die für einen optischen Tomographen notwendige Beleuchtung und Detektion durchführen zu können.

An der Drehvorrichtung 1 ist ein Probenträger 4 (hier ein Gelstab) mit einem zu untersuchenden Objekt 5 befestigt. Zur besseren Übersichtlichkeit ist die Drehvorrichtung 1 relativ zum Gelstab 4 in Art einer Explosionsdarstellung gezeigt. Tatsächlich wird der Gelstab 4 durch die Drehvorrichtung 1 gehalten. Bei dem Objekt kann es sich beispielsweise um einen in den Gelstab 4 eingebetteten Embryo 5 handeln.

Das Objekt 5 wird mittels des Beleuchtungsmoduls 2 entlang einer Beleuchtungsachse BA beleuchtet, wobei das Beleuchtungsmodul 2 ein linienförmig fokussiertes Beleuchtungsstrahlenbündel abgibt (wie durch den Pfeil P1 angedeutet ist), so daß im Gelstab 4 und somit auch im eingebetteten Embryo 5 eine Fläche, die parallel zur y-z-Ebene liegt, beleuchtet wird. Die dabei im Embryo erzeugte Fluoreszenzstrahlung FS wird mittels des Detektionsmoduls 3 erfaßt, so daß dadurch ein optischer Schnitt durch den Embryo 5 detektiert wird (die Detektionsachse ist mit DA bezeichnet).

Die Detektion kann insbesondere konfokal durchgeführt werden, um eine sehr gute Auflösung in x-Richtung zu erhalten.

Die Drehvorrichtung 1 ist nun so ausgebildet, daß sie den Gelstab 4 so positionieren (in z-Richtung) und drehen (um eine Achse parallel zur z-Achse um zumindest den Drehwinkel α von ±45°) kann, daß der Gelstab 4 um eine Objektachse 6 (parallel zur z-Achse) drehbar ist, die durch das Objekt 5 verläuft, unabhängig von der Position des Objekts 5 im Gelstab 4. Hier ist die Objektachse 6 parallel zur Mittenachse TO des Gelstabes 4 versetzt. Somit können mittels des optischen Tomographen optische Schnitte in verschiedenen Drehstellungen des Objekts 5 detektiert werden, aus denen dann in bekannterweise das gewünschte dreidimensionale Bild des Objekts generiert werden kann. Die Positionierung, Drehung des Objektes 5, die Beleuchtung und die Detektion und gegebenenfalls die Auswertung der Meßdaten und Bilderzeugung erfolgt unter Steuerung des Steuermoduls S.

Insbesondere kann das Detektionsmodul 3 das Objekt vergrößert detektieren, so daß der optische Tomograph auch als Mikroskop bezeichnet werden kann.

Das Beleuchtungsmodul 2 und das Detektionsmodul 3 können so ausgebildet sein, daß sie zusammen mit dem Drehtisch, dem Steuermodul 3 und gegebenenfalls weiteren, dem Fachmann bekannten Modulen ein Laser-Scanning-Mikroskop bilden, mit dem in bekannter Weise optische Schnitte des Objektes 5 in verschiedenen Tiefen im Objekt detektiert werden. Durch die Drehvorrichtung 1 können diese optischen Schnitte in verschiedenen Tiefen im Objekt jeweils für verschiedene Drehstellungen durchgeführt werden, so daß ein hochaufgelöstes dreidimensionales Bild des Objektes 5 erstellt werden kann.

Bei der in Fig. 1 dargestellten Ausführungsform schließen die Beleuchtungsachse BA und die Detektionsachse DA einen Winkel von 90° ein. Natürlich sind auch andere Winkel möglich. Insbesondere können die Beleuchtungsachse BA und die Detektionsachse DA zusammenfallen. Ferner kann der optische Tomograph (bzw. das Mikroskop) auch so ausgebildet sein, daß das Beleuchtungsmodul eine Auflicht- oder eine Durchlichtbeleuchtung verwirklicht.

Bei der Ausbildung des Laser-Scanning-Mikroskops kann das Beleuchtungsstrahlenbündel nicht nur linienförmig sonder z.B. auch punktförmig in das Objekt 5 fokussiert werden. Ferner können das Beleuchtungsmodul 2 und das Detektionsmodul 3 so ausgebildet sein, daß die Beleuchtung und/oder die Detektion konfokal erfolgt.

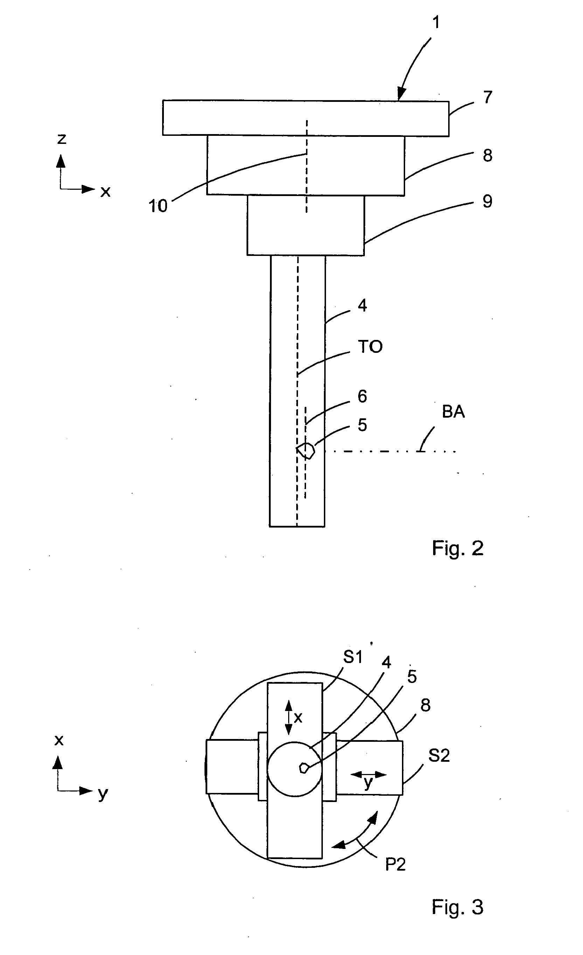

Um die gewünschte Drehung durch die Objektachse 6 realisieren zu können, wobei zumindest die Drehung um ± 45° gewünscht ist, kann die Drehvorrichtung 1 beispielsweise so ausgebildet sein, wie in Fig. 2 und 3 dargestellt ist.

Die Drehvorrichtung 1 umfaßt ein erstes Positioniermodul 7, an dessen Unterseite (Fig. 2) ein erster Drehtisch 8 befestigt ist. An der Unterseite des ersten Drehtisches 8 ist ein x-y-Tisch 9 drehfest mit dem ersten Drehtisch 8 verbunden. An dem x-y-Tisch 9 ist der Gelstab 4 drehfest gehalten.

Das erste Positioniermodul 7 dient dazu, den ersten Drehtisch 8 zusammen mit dem x-y-Tisch 9 und dem Gelstab 4 entlang der z-Richtung verstellen zu können, so daß das Objekt 5 in die gewünschte z-Position relativ zum Beleuchtungsmodul 2 und dem Detektionsmodul 3 positioniert werden kann. Der x-y-Tisch 9, der einen ersten Schlitten S1 zur Positionierung in x-Richtung und einen zweiten Schlitten S2 zur Positionierung in y-Richtung aufweist, dient dazu, die Objektachse 6 so zu positionieren, daß sie mit der Drehachse 10 des Drehtisches 8 fluchtet bzw. zusammenfällt (wie z.B. in der Ansicht von unten in Fig. 3 angedeutet ist). Wenn die Objektachse 6 mit der Drehachse 10 zusammenfällt, führt eine Drehung des ersten-Drehtisches 8 (durch den Pfeil P2 in Fig. 3 angedeutet) zu einer Drehung des Objektes 5 um die Objektachse 6.

Somit kann mit einfachen Mitteln die gewünschte Positionierung und Drehung des Objekts 5 mit der erforderlichen Genauigkeit erreicht werden.

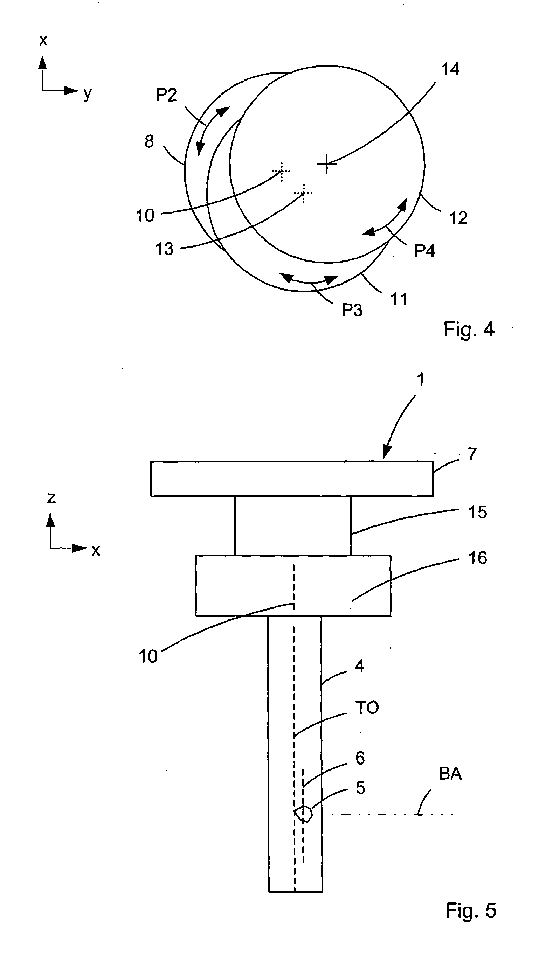

In Fig. 4 ist eine Abwandlung der Drehvorrichtung von Fig. 2 und 3 dargestellt. Bei der Ausführungsform von Fig. 4, die eine Ansicht der Drehvorrichtung 1 von unten zeigt, sind anstatt des x-y-Tisches 9 ein zweiter und dritter Drehtisch 11, 12 vorgesehen. Der zweite Drehtisch 11 ist mit dem ersten Drehtisch 8 drehbar um eine zweite Drehachse 13 verbunden (durch den Pfeil P3 angedeutet). Der dritte Drehtisch 12 ist mit dem zweiten Drehtisch 11 drehbar um eine dritte Drehachse 14 verbunden (durch den Pfeil P4 angedeutet). Die erste und zweite Drehachse 10 und 13 sind zueinander versetzt. Gleiches gilt für die zweite und dritte Drehachse 13 und 14, so daß mittels des zweiten und dritten Drehtisches 11, 12 wiederum die Objektachse 6 des Gelstabes 4 (in Fig. 4 ist der Gelstab 4 zur Vereinfachung der Darstellung nicht eingezeichnet) so positioniert werden kann, daß sie mit der ersten Drehachse 10 des ersten Drehtisches 8 zusammenfällt. Somit wird dann aufgrund einer Drehung des ersten Drehtisches 8 das Objekt 5 um die Objektachse 6 gedreht.

In Fig. 5 ist eine weitere Ausführungsform der Drehvorrichtung gezeigt. Bei dieser Ausführungsform umfaßt die Drehvorrichtung das erste Positioniermodul 7, einen mit der Unterseite des ersten Positioniermoduls 7 verbundenen x-y-Tisch 15 sowie einen Drehtisch 16, der drehfest mit dem x-y-Tisch 15 verbunden ist. An der Unterseite des Drehtisches 16 wird der Gelstab 4 drehfest gehalten.

Das erste Positioniermodul 7 dient in gleicher Weise wie bei den Ausführungsformen von Fig.2 bis 4 dazu, das Objekt 5 in z-Richtung zu positionieren.

Der x-y-Tisch 15 wird nun so angesteuert, daß sowohl in der x-Richtung als auch der y-Richtung eine sinusförmige Bewegung durchgeführt wird. Dies hat zur Folge, daß sich der Drehtisch 16 zusammen mit dem entsprechend mittig angeordneten Gelstab 4 kreisförmig bewegt. Der Gelstab 4 wird nun aber auch gleichzeitig durch den Drehtisch 16 um seine Mittenachse TO gedreht, wobei eine ganze Umdrehung des Gelstabes pro Periode der Sinusbewegungen in x- und y-Richtung durchgeführt wird. Dadurch kann eine beliebige Drehachse innerhalb des Gelstabes 4, die parallel zu seiner Mittenachse TO verläuft, als Drehachse der kombinierten Bewegung des x-y-Tisches 15 und des Drehtisches 16 festgelegt werden, so daß wiederum die Objektachse 5 frei im Gelstab 4 gewählt werden kann.

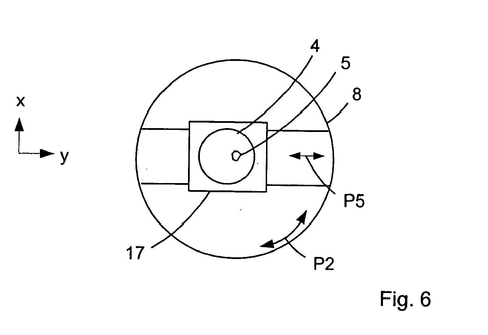

In Fig. 6 ist eine weitere Ausführungsform der Drehvorrichtung gezeigt. Diese Ausführungsform basiert auf der Ausführungsform von Fig. 2 und 3 und unterscheidet sich von dieser dadurch, daß anstelle des x-y-Tisches 9 ein Lineartisch 17 vorgesehen wird, der mit dem ersten Drehtisch 8 so verbunden ist, daß er relativ zum ersten Drehtisch 8 nur eine Linearbewegung in eine Richtung (durch den Doppelpfeil P5 angedeutet) ausführen kann. Der Gelstab 4 ist auf diesem Lineartisch 17 drehbar befestigt, so daß durch die Drehbarkeit des Gelstabes 4 relativ zum Lineartisch 17 und die Linearbewegung des Lineartisches die Objektachse 6 so positioniert werden kann, daß sie mit der ersten Drehachse 10 des ersten Drehtisches 8 zusammenfällt. Natürlich kann der Lineartisch 17 auch so ausgebildet sein, daß er die Drehbarkeit relativ zum ersten Drehtisch 8 aufweist. In diesem Fall kann der Gelstab 4 drehfest mit dem Lineartisch 17 verbunden sein.

## Patentansprüche

1. Drehvorrichtung (1) für einen optischen Tomographen, mit der ein Probenträger (4) mit einem zu untersuchenden Objekt (5) um eine vorbestimmte Objektachse (6) drehbar ist,
wobei die Drehvorrichtung (1) aufweist
ein Drehmodul (8; 15), das eine Drehung um eine erste Drehachse (10) bewirken kann,
ein erstes Positioniermodul (7), das mit dem Drehmodul (8) verbunden ist und mit dem das erste Drehmodul (8; 15) entlang der ersten Drehachse (10) positionierbar ist,
und ein zweites Positioniermodul (9; 11, 12; 16; 17), das mit dem Drehmodul (8; 15) verbunden ist und an dem der Probenträger (4) mit dem zu untersuchenden Objekt (5) befestigbar ist,
wobei mittels des zweiten Positioniermoduls (9; 11, 12; 16; 17) die Objektachse (6) so relativ zur ersten Drehachse (10) positionierbar ist, daß bei Drehung durch das Drehmodul (8; 15) das Objekt (5) um die Objektachse (6) gedreht wird.

2. Drehvorrichtung nach Anspruch 1, bei der das Drehmodul (8) einen ersten Drehtisch aufweist, der um die erste Drehachse (10) drehbar ist, und bei dem mittels des zweiten Positioniermoduls (9; 11, 12; 16; 17) die Objektachse (6) so positionierbar ist, daß sie mit der ersten Drehachse (10) zusammenfällt.

3. Drehvorrichtung nach Anspruch 2, bei der das zweite Positioniermodul einen x-y-Tisch (9) aufweist, der drehfest mit dem Drehmodul (8) verbunden ist.

4. Drehvorrichtung nach Anspruch 2, bei der das zweite Positioniermodul einen zweiten und dritten Drehtisch (11, 12) aufweist, wobei der zweite Drehtisch (11) um eine zweite Drehachse (13) drehbar am ersten Drehtisch (8), der dritte Drehtisch (12) um eine dritte Drehachse (14) drehbar am zweiten Drehtisch (11) befestigt ist und die erste und zweite Drehachse (10, 13) sowie die zweite und dritte Drehachse (13, 14) jeweils nicht zusammenfallen.

5. Drehvorrichtung nach Anspruch 2, bei der das zweite Positioniermodul einen zweiten Tisch (17) aufweist, der über eine Linearverschiebeeinrichtung mit dem ersten Drehtisch (8) verbunden ist, wobei der am zweiten Tisch (17) befestigte Probenträger (4) relativ zum ersten Drehtisch (8) drehbar ist.

6. Drehvorrichtung nach Anspruch 5, bei der der zweite Tisch (17) relativ zum ersten Drehtisch (8) drehbar ist.

7. Drehvorrichtung nach Anspruch 1, bei der das Drehmodul einen x-y-Tisch (15) aufweist, der so angesteuert wird, daß das zweite Positioniermodul (16) um die erste Drehachse (10) gedreht wird, und bei dem das zweite Positioniermodul (16) einen Drehtisch aufweist, der drehfest mit dem x-y-Tisch des Drehmoduls verbunden ist.

8. Optischer Tomograph mit
einer Drehvorrichtung (1) nach einem der obigen Ansprüche,
einem Beleuchtungsmodul (2) zum Beleuchten des Objekts (5),
einem Detektionsmodul (3) zum Detektieren zumindest eines optischen Schnitts des Objekts (5) und
einem Steuermodul (4) zur Steuerung des Tomographen.

9. Optischer Tomograph nach Anspruch 8, wobei der optische Tomograph als Mikroskop ausgebildet ist.

10. Optischer Tomograph nach Anspruch 8 oder 9, wobei der optische Tomograph als Laser-Scanning-Mikroskop ausgebildet ist.
